(19) Europäisches Patentamt

European Patent Office

Office européen des brevets

(11) **EP 0 730 538 B1**

(12) **FASCICULE DE BREVET EUROPEEN**

(45) Date de publication et mention
de la délivrance du brevet:
**04.06.1997 Bulletin 1997/23**

(21) Numéro de dépôt: **94931060.1**

(22) Date de dépôt: **13.10.1994**

(51) Int. Cl.$^6$: **B60T 13/565**, B60T 13/569

(86) Numéro de dépôt international:
**PCT/FR94/01187**

(87) Numéro de publication internationale:
**WO 95/14597 (01.06.1995 Gazette 1995/23)**

(54) **DISPOSITIF DE FREINAGE ASSISTE A COURSE MASQUEE ET A GAIN GARANTI**

BREMSVORRICHTUNG MIT MASKIERTEM HUB UND GLEICHBLEIBENDER VERSTÄRKUNG

MASKED-TRAVEL POWER-ASSISTED BRAKING DEVICE WITH GUARANTEED GAIN

(84) Etats contractants désignés:
**DE ES FR GB IT**

(30) Priorité: **29.11.1993 FR 9314225**

(43) Date de publication de la demande:
**11.09.1996 Bulletin 1996/37**

(73) Titulaire: **Bosch Systemes de Freinage
93700 Drancy (FR)**

(72) Inventeurs:
• **CASTEL, Philippe
F-75005 Paris (FR)**
• **CASTELLO, Olivier
F-93140 Bondy (FR)**

(74) Mandataire: **Bentz, Jean-Paul
BOSCH SYSTEMES DE FREINAGE,
126 rue de Stalingrad
93700 Drancy (FR)**

(56) Documents cités:
**DE-A- 2 021 287         DE-A- 3 112 343
FR-A- 2 558 126**

## Description

La présente invention concerne un dispositif de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance susceptible d'être commandé par application de ladite force d'entrée sur une tige de commande contrôlant l'ouverture d'un clapet, pour exercer la force d'actionnement sur le piston hydraulique principal, le servomoteur comportant une enveloppe rigide séparée de façon étanche en deux chambres au moyen au moins d'une cloison mobile susceptible, sous l'effet d'une différence de pression établie entre les deux chambres par l'ouverture du clapet, de se déplacer dans le même sens qu'un piston pneumatique portant le clapet et lui aussi mobile par rapport à l'enveloppe, la force d'entrée étant transmise par l'intermédiaire d'un disque de réaction sur lequel s'appuie également le piston pneumatique pour lui fournir une partie au moins de la force d'assistance.

Un dispositif de ce type est bien connu dans l'art antérieur et se trouve par exemple décrit dans le brevet US 4 491 058.

Un tel dispositif de freinage présente l'avantage, résultant de l'utilisation d'un piston pneumatique mobile par rapport à l'enveloppe rigide, que la course totale disponible pour la tige de commande, donc pour la pédale de frein, est relativement longue, ce qui constitue une condition nécessaire pour assurer le contrôle optimal de la décélération du véhicule au freinage.

Cependant cette condition, bien que nécessaire, n'est pas suffisante, et ce contrôle se trouve amoindri dans les dispositifs actuels de freinage assisté par le fait que l'obtention de la pression minimale nécessaire pour amorcer le freinage requiert une course initiale très importante de la tige de commande.

Le but de la présente invention est de permettre une optimisation du contrôle, par le conducteur d'un véhicule, de la décélération de celui-ci, en proposant un dispositif de freinage assisté dont l'efficacité se manifeste dès le début du freinage, c'est-à-dire après une très faible course initiale de la pédale de frein.

A cette fin, le dispositif de la présente invention est essentiellement caractérisé en ce que la cloison mobile est montée librement coulissante par rapport au piston pneumatique, en ce que le piston hydraulique principal du maître-cylindre comporte lui-même un cylindre mobile, creux, qui communique avec le maître-cylindre, qui est solidaire de la cloison mobile, et à l'intérieur duquel coulisse, de façon étanche et suivant la direction axiale, un piston hydraulique secondaire susceptible de recevoir au moins ladite force d'entrée en provenance du disque de réaction, et en ce que le libre coulissement de la cloison mobile par rapport au piston pneumatique est limité, pour un mouvement de cette cloison en direction du maître-cylindre, par un entraînement du piston hydraulique secondaire, dans cette même direction, par le cylindre mobile.

Selon un mode de réalisation préféré de l'invention, le cylindre mobile présente une butée interne susceptible de coopérer avec le piston hydraulique secondaire pour assurer l'entraînement de ce dernier.

Outre les avantages déjà exposés et la simplicité de fabrication et de réglage à laquelle elles conduisent, ces caractéristiques permettent d'une part d'assurer que toute défaillance du circuit hydraulique primaire reste sans conséquence sur la valeur du rapport d'amplification du servomoteur et d'autre part de régler les sections hydrauliques respectives du cylindre mobile et du piston hydraulique secondaire indépendamment de la valeur de ce rapport d'amplification.

D'autres caractéristiques et avantages de l'invention ressortiront clairement de la description qui en est faite ci-après, à titre indicatif et nullement limitatif, en référence aux dessins annexés, sur lesquels :

- la Figure 1 est une vue en coupe partielle d'un dispositif conforme à l'invention; et

- la Figure 2 est une vue en coupe partielle et schématique du même dispositif.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 comprenant une membrane 4a et une jupe rigide 4b et susceptible d'accompagner le mouvement d'un piston pneumatique 5 mobile à l'intérieur de l'enveloppe 3 en direction du maître-cylindre 2.

La chambre avant 3a, dont la face avant est fermée de façon étanche par le maître-cylindre 2, est en permanence raccordée à une source de dépression (non représentée) à travers un clapet anti-retour 6.

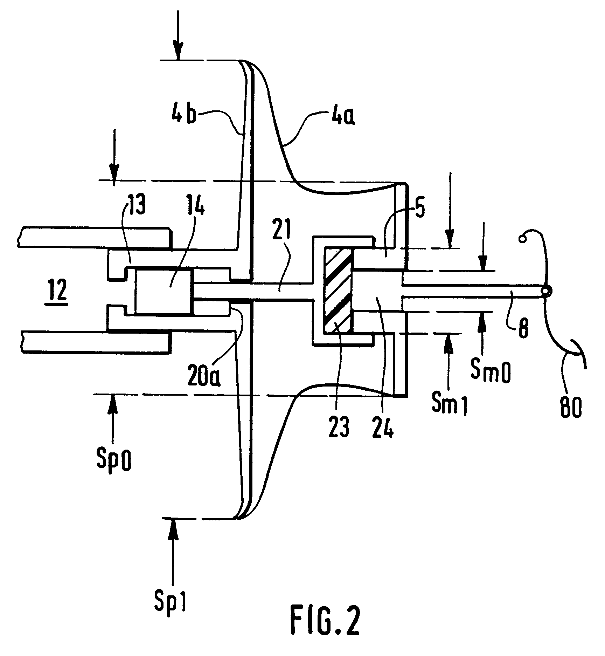

La pression dans la chambre arrière 3b est contrôlée par un clapet 7, commandé par une tige de commande 8, laquelle est reliée à une pédale de frein 80 (figure 2).

Lorsque la tige de commande 8 est en position de repos, en l'occurrence tirée vers la droite, le clapet 7 établit normalement une communication entre les deux chambres 3a et 3b du servomoteur, ou vient d'une position où cette communication est établie.

La chambre arrière 3b étant alors soumise à la même dépression que la chambre avant 3a, le piston 5 est repoussé vers la droite, en position de repos, par un ressort 9a tandis qu'un ressort 9b repousse de la même façon la jupe rigide 4b.

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique.

La différence de pression entre les deux chambres, alors ressentie par la membrane 4a, exerce sur la cloison mobile 4 et sur le piston 5 une poussée qui tend à les déplacer vers la gauche en comprimant les ressorts 9a, 9b.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant l'axe 10 de la tige de poussée 8 en direction du maître-cylindre 2, et se conjuguent pour constituer la force d'actionnement de ce dernier.

Plus précisément, la force d'actionnement est appliquée sur le piston hydraulique principal 11 du maître-cylindre et en provoque le déplacement vers la gauche (sur la figure), ce qui entraîne une élévation de pression du liquide de freinage présent dans le volume intérieur 12 du maître-cylindre, et un actionnement du frein relié à ce dernier.

Le piston hydraulique principal 11 est en fait composite et comprend d'une part un cylindre 13 mobile et creux, et d'autre part un piston hydraulique secondaire 14.

Le volume intérieur 15 du cylindre mobile 13 communique avec le volume intérieur 12 du maître-cylindre par l'intermédiaire d'au moins un orifice, tel que 16, ménagé dans le cylindre mobile suivant une direction axiale, et d'au moins un clapet anti-retour, tel que 17, n'autorisant la circulation de fluide de freinage qu'en provenance de l'intérieur 12 du maître-cylindre vers l'intérieur 15 du cylindre mobile 13.

En dehors du passage de fluide que permettent ces passages 16 et 17 entre le volume intérieur 12 du maître-cylindre 2 et celui du cylindre mobile 13, ce cylindre mobile 13 coulisse de façon étanche dans le maître-cylindre 2, l'étanchéité étant obtenue grâce au moins à un joint annulaire 18.

Le piston hydraulique secondaire 14, quant à lui, coulisse à l'intérieur du cylindre mobile 13, qu'il obture de façon étanche grâce à un joint annulaire 19.

Par ailleurs, le cylindre mobile 13 est rendu solidaire de la jupe rigide 4b au moyen de la bague 20.

Le piston hydraulique secondaire 14 est en fait constitué par le prolongement axial d'une tige de poussée 21 susceptible de lui transmettre d'une part la force d'entrée exercée sur la tige de commande 8 et d'autre part une fraction de la force d'assistance développée par le piston pneumatique 5, ces forces étant transmises, de façon en soi connue, par l'intermédiaire d'un disque de réaction 23 sur une face duquel s'appuient ce piston pneumatique et un palpeur 24 actionné par la tige de commande, et dont l'autre face s'appuie sur une surface d'appui 25 solidaire de la tige de poussée 21.

Le fonctionnement du dispositif décrit jusqu'à présent est le suivant.

Lorsqu'une force d'entrée est appliquée sur la tige de commande 8, le piston hydraulique secondaire 14 est sollicité vers la gauche, tendant à entraîner le cylindre mobile et/ou à augmenter la pression dans le maître-cylindre.

Après une course prédéterminée de la tige de poussée 8, le clapet 7 ouvre à l'atmosphère la chambre arrière 3b du servomoteur, préalablement isolée de la chambre avant 3a, et une force d'assistance est appliquée au cylindre mobile 13 par la jupe rigide 4b à travers la bague 20.

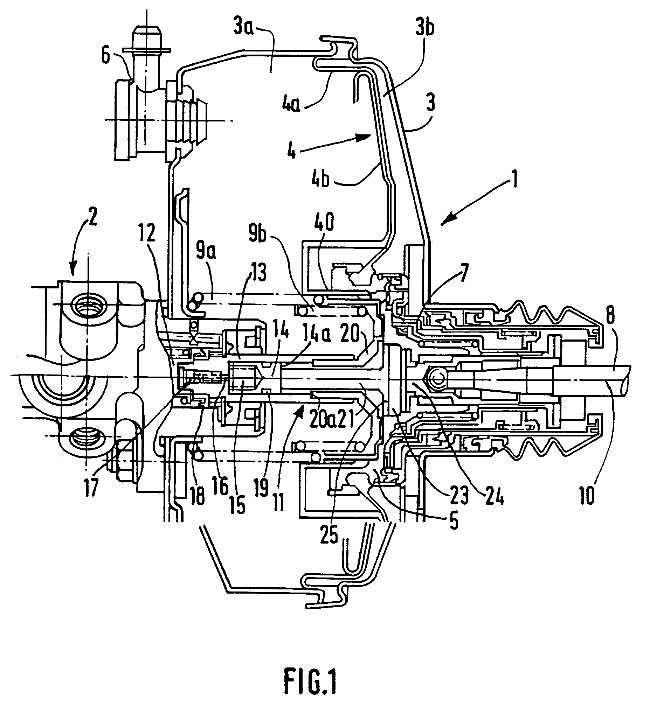

La pression hydraulique dans le volume interne 12 du maître-cylindre s'élève de façon nette et s'établit, par circulation de fluide hydraulique à travers les passages 16 et 17, dans le volume interne 15 du cylindre mobile, faisant ainsi apparaître, sur le piston hydraulique secondaire 14, une force qui tend à repousser ce piston secondaire vers la tige de commande 8, c'est-à-dire vers la droite sur la figure 1.

Selon l'invention, la cloison mobile 4 est, de préférence par l'intermédiaire de la partie centrale 40 de sa jupe rigide 4b, montée librement coulissante par rapport au piston pneumatique 5 de manière à pouvoir, dans un premier temps, avancer seule en direction du maître-cylindre 2, le libre coulissement de la cloison mobile étant cependant limité par le fait que le piston hydraulique secondaire 14 se trouve entraîné par le cylindre mobile 13 après une course déterminée de la paroi mobile en direction du maître-cylindre.

A cette fin, le cylindre mobile 13 présente par exemple une butée interne 20a formé par la bague 20 et susceptible de coopérer avec le rebord périphérique interne 14a du piston hydraulique secondaire 14 pour assurer l'entraînement de ce dernier par la jupe 4b après une libre course initiale de cette jupe.

Le principe de l'invention est schématisé sur la figure 2, sur laquelle les différents composants apparaissent avec les mêmes chiffres de référence que sur la figure 1.

Si $Sm0$ désigne la section du palpeur 24, $Sm1$ la section d'entrée du disque de réaction 23, $Sp0$ la section du piston 5 soumise à la différence de pression entre les deux chambres 3a et 3b, et $Sp1$ la section totale de la jupe 4b, le rapport d'amplification, c'est-à-dire le rapport de la force d'actionnement à la force d'entrée, dans un servomoteur conforme à l'invention est égal à :

$$1 + (Sp1 / Sp0).((Sm1 / Sm0) -1).$$

Dans ces conditions, il est clair d'une part qu'une éventuelle défaillance du circuit hydraulique primaire ne s'assortit d'aucune variation du rapport d'amplification, et d'autre part que les sections hydrauliques du cylindre mobile 13 et du piston hydraulique secondaire 14 peuvent être choisies indépendamment de la valeur souhaitée pour le rapport d'amplification, ce qui permet de choisir librement la longueur de la course initiale de la jupe pour laquelle la butée 20a rencontre le rebord 14a du piston hydraulique secondaire 14.

## Revendications

1. Dispositif de freinage assisté pour véhicule à moteur, comprenant d'une part un maître-cylindre (2) rempli d'un fluide de freinage et équipé d'un piston hydraulique principal (11) destiné à recevoir une force d'actionnement se composant d'une force d'entrée et d'une force d'assistance agissant toutes deux suivant une direction axiale, et d'autre part un servomoteur pneumatique d'assistance (1) susceptible d'être commandé par application de ladite force d'entrée sur une tige de commande (8) contrôlant l'ouverture d'un clapet (7), pour exercer ladite force d'actionnement sur le piston hydraulique principal, le servomoteur comportant une enveloppe rigide (3) séparée de façon étanche en deux chambres (3a, 3b) au moyen au moins d'une cloison mobile (4) susceptible, sous l'effet d'une différence de pression établie entre les deux chambres par l'ouverture du clapet, de se déplacer dans le même sens qu'un piston pneumatique (5) portant ledit clapet et lui aussi mobile par rapport à l'enveloppe, ladite force d'entrée étant transmise par l'intermédiaire d'un disque de réaction (23) sur lequel s'appuie également ledit piston pneumatique pour lui fournir une partie au moins de ladite force d'assistance, caractérisé en ce que la cloison mobile (4) est montée librement coulissante par rapport au piston pneumatique (5), en ce que le piston hydraulique principal du maître-cylindre comporte lui-même un cylindre mobile (13), creux, qui communique avec le maître-cylindre, qui est solidaire de la cloison mobile, et à l'intérieur duquel coulisse, de façon étanche et suivant la direction axiale, un piston hydraulique secondaire (14) susceptible de recevoir au moins ladite force d'entrée en provenance du disque de réaction, et en ce que le libre coulissement de la cloison mobile (4) par rapport au piston pneumatique (5) est limité, pour un mouvement de cette cloison en direction du maître-cylindre, par un entraînement du piston hydraulique secondaire (14), dans cette même direction, par le cylindre mobile (13).

2. Dispositif de freinage suivant la revendication 1, caractérisé en ce que le cylindre mobile (13) présente une butée interne susceptible de coopérer avec le piston hydraulique secondaire (14) pour assurer l'entraînement de ce dernier.

## Claims

1. Boosted brake device for a motor vehicle, comprising, on the one hand, a master cylinder (2) filled with a brake fluid and equipped with a main hydraulic piston (11) intended to receive an actuation force composed of an input force and a boost force both acting in an axial direction, and, on the other hand, a pneumatic booster (1) capable of being activated by applying the said input force to a control rod (8) controlling the opening of a valve (7), in order to exert the said actuation force on the main hydraulic piston, the booster comprising a rigid casing (3) separated in leaktight fashion into two chambers (3a, 3b) by means of at least one movable partition (4), capable, under the effect of a pressure difference established between the two chambers by opening the valve, of moving in the same direction as a pneumatic piston (5) carrying the said valve and itself also capable of moving with respect to the casing, the said input force being transmitted via a reaction disk (23) on which the said pneumatic piston also bears in order to supply to it at least a part of the said boost force, characterized in that the movable partition (4) is mounted so that it can slide freely with respect to the pneumatic piston (5), in that the main hydraulic piston of the master cylinder itself includes a hollow movable cylinder (13) which communicates with the master cylinder which is secured to the movable partition, and inside which there slides, in leaktight fashion and in the axial direction, a secondary hydraulic piston (14) capable of receiving at least the said input force coming from the reaction disk, and in that the free sliding of the movable partition (4) with respect to the pneumatic piston (5) is limited, for a movement of this partition toward the master cylinder, by the secondary hydraulic piston (14) being driven in this same direction, by the movable cylinder (13).

2. Braking device according to claim 1, characterized in that the movable cylinder (13) exhibits an internal stop capable of interacting with the secondary hydraulic piston (14) in order to drive the latter.

## Patentansprüche

1. Bremsunterstützungsvorrichtung für ein Kraftfahrzeug mit einerseits einem Hauptzylinder (2), der mit einem Bremsfluid gefüllt ist und mit einem Hydraulikhauptkolben (11) versehen ist, der dafür vorgesehen ist, eine Betätigungskraft zu empfangen, die sich aus einer Eingangskraft und einer Unterstützungskraft zusammensetzt, die beide entlang einer axialen Richtung wirken, und andererseits einem pneumatischen Unterstützungs-Servomotor (1), der durch Aufbringen der Eingangskraft auf eine Steuerstange (8) gesteuert werden kann, welche das Öffnen eines Ventilelementes (7) steuert, um die Betätigungskraft auf den Hydraulikhauptkolben auszuüben, wobei der Servomotor ein starres Gehäuse (3) aufweist, das in dichter Weise in zwei Kammern (3a, 3b) mittels wenigstens einer beweglichen Trennwand (4) unterteilt ist, die sich unter der Wirkung einer Druckdifferenz, die zwischen den beiden Kammern durch Öffnen des Ventilelementes gebildet wird, in der gleichen Richtung wie ein Pneumatikkolben (5) verstellen kann, der das Ventilelement trägt und seinerseits bezüglich des Gehäuses beweglich ist, wobei die Eingangskraft über eine Reaktionsscheibe (23) übertragen wird, an der sich auch der Pneumatikkolben abstützt, um dieser wenigstens einen Teil der Unterstützungskraft zu liefern, dadurch gekennzeichnet, daß die bewegliche Trennwand (4) bezüglich des Pneumatikkolbens (5) frei verschiebbar angebracht ist, daß der Hydraulikhauptkolben des Hauptzylinders seinerseits einen hohlen beweglichen Zylinder (13) aufweist, der mit dem Hauptzylinder in Verbindung steht, der fest mit der beweglichen Trennwand verbunden ist und in dessen Inneren in dichter Weise und entlang der axialen Richtung ein Hydrauliksekundärkolben (14) gleitet, der wenigstens die von der Reaktionsscheibe stammende Eingangskraft aufnehmen kann, und daß die freie Verschiebbarkeit der beweglichen Trennwand (4) bezüglich des Pneumatikkolbens (5) hinsichtlich einer Bewegung dieser Trennwand in Richtung des Hauptzylinders durch eine Mitnahme des Hydrauliksekundärkolbens (14) in derselben Richtung mittels des beweglichen Zylinders (13) begrenzt ist.

2. Bremsvorrichtung nach Anspruch 1, dadurch gekennzeichnet, daß der bewegliche Zylinder (13) einen inneren Anschlag aufweist, der mit dem Hydrauliksekundärkolben (14) zusammenwirken kann, um dessen Mitnahme zu gewährleisten.

FIG.1

FIG.2